# NEUE EUROPÄISCHE PATENTSCHRIFT

(11) **EP 0 467 039 B2**
(45) Veröffentlichungstag und Bekanntmachung des Hinweises auf die Entscheidung über den Einspruch: **12.01.2005**
(45) Hinweis auf die Patenterteilung: 09.08.1995
(21) Anmeldenummer: 91108077.8
(22) Anmeldetag: 18.05.1991
(51) Int. Cl.: B32B 27/34, A22C 13/00, B65D 65/40

(54) **Mehrschichtige, schlauchförmige Verpackungshülle**
Multi-layered tubular packaging casing
Enveloppe tubulaire d'emballage à plusieurs couches

(30) Priorität: 26.05.1990 DE 4017046
(43) Veröffentlichungstag der Anmeldung: 22.01.1992
(73) Patentinhaber: Kalle GmbH & Co. KG, 65203 Wiesbaden (DE)
(72) Erfinder: Stenger, Karl, W-6220 Rüdesheim (DE); Saal, Marliese, W-6501 Heidesheim (DE)
(74) Vertreter: Zounek, Nikolai, Dipl.-Ing.

(56) Entgegenhaltungen:
- EP-A- 0 183 512
- EP-A- 0 264 269
- EP-A- 0 318 964
- DE-A- 2 926 439
- DE-A- 3 212 343
- US-A- 4 394 485
- US-A- 4 888 223

## Beschreibung

Die Erfindung bezieht sich auf eine mehrschichtige, schlauchförmige Verpackungshülle für pastöses Füllgut, insbesondere auf eine künstliche Wursthülle, auf Basis von Polyamid.

Hüllen auf Basis von Polyamid werden in zunehmendem Maße zur Verpackung von Lebensmittel, insbesondere als künstliche Wursthüllen, eingesetzt. Für diesen Zweck wird für verschiedene Wursttypen ein Hüllenmaterial verlangt, das eine niedrige Wasserdampfdurchlässigkeit aufweist, so daß der Gewichtsverlust beim Lagern der Wurst infolge Wasserabgabe der Wurstmasse möglichst gering bleibt. Die Wurst zeigt dann auch nach längerer Lagerung eine faltenfreie, eng anliegende Hülle, zwischen der Wurstmasse und der Hülleninnenseite entstehen keine Zwischenräume, die zu Geleeabsatz der Wurstmasse führen. Für diesen Zweck ist es bekannt, die Polyamidschicht mit einer Polymerschicht zu kombinieren, welche eine niedrigere Wasserdampfdurchlässigkeit als die Polyamidschicht aufweist. Für andere Lebensmittel ist dagegen die Sauerstoffdurchlässigkeit dieser Verbundfolien noch zu hoch. Wurstmasse vom Leberwursttyp verfärbt sich durch Sauerstoffzutritt, so daß diese Hüllen für diese Wursttypen nicht geeignet sind. Zur Herabsetzung der Sauerstoffdurchlässigkeit ist deshalb in der Polyamidfolie zusätzlich eine Sauerstoff-Barriereschicht erforderlich.

Die EP-A-0 305 959 beschreibt eine mehrschichtige Polyamidfolie, die z.B. in Form eines heißsiegelfähigen Beutels zur Verpackung von Fleisch und Geflügel vorgesehen ist. Sie besteht aus einer Barriereschicht für Sauerstoff aus einem amorphen teilaromatischen Copolyamid (PA 6I/6T), welches aus Einheiten von Hexamethylendiamin, Terephthalsäure und Isophthalsäure besteht. Diese Copolyamidschicht bildet die Kernschicht der Folie. Sie ist beidseitig von Polyolefinschichten umgeben, welche eine Wasserdampfsperre bilden, wobei die innere Polyolefinschicht den Austritt von Feuchtigkeit aus dem verpackten Lebensmittel in die Kernschicht aus Copolyamid verhindern soll. Polyolefinschichten sind jedoch als Innenseiten von Wursthüllen von Nachteil, denn sie führen zu einer unzureichenden Haftung zwischen Wurstmasse und Wursthülleninnenwand und fördern den Geleeabsatz.

Dieses Problem hatte bereits die EP-A-0 127 296 (= US-A-4,606,922) zu lösen versucht. Dort wurde vorgeschlagen, für die Innenseite einer mehrschichtigen Polyamidfolie ein lonomeres vorzusehen und die Innenseite mit ionisierender Strahlung zu behandeln. Die DE-A-38 16 942 (= US-A-4,888,223) gibt bei einer mehrschichtigen Polyamidhülle zur Vermeidung der Faltenbildung die Lehre, die innenseitige Schicht aus Polyolefinharz mit Koronaentladung zu behandeln und gegebenenfalls mit Stärkepulver zu bestreuen. Diese Vorschläge zeigen somit den Nachteil, daß zur Verhinderung von Faltenbildung und Geleeabsatz zwischen Wurstmasse und Hülleninnenseite eine zusätzliche Vorbehandlung der Hülle auf ihrer Innenseite erforderlich ist.

Der vorliegenden Erfindung liegt somit die Aufgabe zugrunde, eine schlauchförmige Verpackungshülle auf Basis von Polyamid anzugeben, welche nach dem Füllen an dem umhüllten Füllgut, insbesondere Wurstmasse, haften bleibt. Die Hülle soll sich problemlos als künstliche Wursthülle, insbesondere für Kochund Brühwurst, einsetzen lassen. Sie soll eine gegenüber Wasserdampf und Luftsauerstoff verringerte Durchlässigkeit aufweisen. Würste mit dieser Umhüllung sollen selbst nach 4- bis 6-wöchiger Lagerzeit keinen merklichen Feuchtigkeitsverlust zeigen, der sich in einer Abnahme des Gewichts der Wurst und durch faltiges Aussehen bemerkbar macht, noch soll sich durch Abstellen der Hülle von der Wurstmasse zwischen Hüllenwand und Wurstmasse Gelee absetzen. Die Hülle soll auch zur sauerstoffdichten Verpakkung von luftempfindlichen Gütern, wie z.B. Wurstmassen vom Leberwursttyp, geeignet sein, so daß sie sich während der Lagerzeit nicht verändern, insbesondere nicht in unansehnlicher Weise verfärben.

Diese Aufgabe wird gelöst durch die in Anspruch 1 angegebene Verpackungshülle. Die abhängigen Ansprüche geben zweckmäßige Weiterbildungen der Hülle an.

Die Hülle zeigt eine für mehrschichtige Verpackungshüllen aus Polyamid mit guten Barriereeigenschaften vergleichsweise dünne Wandstärke. Sie liegt vorzugsweise bei maximal etwa 60, insbesondere maximal 45 Mikrometer. Die Untergrenze liegt bei etwa 30 Mikrometer. Das Schlauchkaliber wird dem Verwendungszweck entsprechend angepaßt. Bei Verwendung der Hülle für Koch- und Brühwürste beträgt das Schlauchkaliber im allgemeinen 30 bis 160, insbesondere 40 bis 135 mm.

Die Verpackungshülle besteht aus wenigstens drei Schichten, nämlich einer äußeren, einer mittleren und einer inneren Schicht, wobei die äußere und die innere Schicht aus Polyamiden und die mittlere Schicht aus einer Polymermischung mit Polyolefin besteht.

Die äußere Schicht hat gewöhnlich die größte Dicke im Vergleich mit den beiden anderen Schichten. Die Dicke beträgt im allgemeinen 14 bis 48 µm bei einer Gesamtdicke der Folie von 30 bis 60 µm. Diese Schicht kann deshalb im allgemeinen als die eigentliche Trägerschicht der mehrschichtigen Hülle betrachtet werden. Gewöhnlich ist sie aus einer einzigen Schicht aufgebaut. Sie zeigt eine vergleichsweise hohe Wasseraufnahmefähigkeit.

Die äußere Schicht nimmt beim Brühen oder Kochen der Wurst Wasser auf, welches beim anschließenden Abkühlen und Lagern der Wurst wieder abgegeben wird. Dadurch schrumpft die äußere Schicht beim Trocknen, so daß die Wursthülle an der abgekühlten Wurst eng und faltenfrei anliegt. Da die Hülle durch die mittlere Schicht praktisch wasserdicht und wasserdampfundurchlässig ist, kann die äußere Schicht auch keine Feuchtigkeit aus der Wurstmasse aufnehmen.

Die äußere Schicht besteht im wesentlichen aus einem aliphatischen Polyamid, aliphatischem Copolyamid oder einer Polymermischung aus wenigstens einer dieser Verbindungen.

Das aliphatische Polyamid ist ein Homopolykondensat aus aliphatischen primären Diaminen, insbesondere mit 4 bis 8 C-Atomen, und aliphatischen Dicarbonsäuren, insbesondere mit 4 bis 10 C-Atomen oder ein Homopolymerisat von Omega-Aminocarbonsäuren mit 6 bis 12 C-Atomen oder deren Lactame. Das aliphatische Copolyamid enthält die gleichen Einheiten und ist z.B. ein Polymeres auf Basis von einem oder verschiedenen aliphatischen Diaminen und einer oder verschiedenen aliphatischen Dicarbonsäuren und/oder einem oder verschiedenen Omega-Aminocarbonsäuren bzw. deren Lactame. Beispiele für geeignete Dicarbonsäuren sind Adipinsäure, Azelainsäure, Sebazinsäure und Dodecandicarbonsäure, geeignete Diamine sind Tetra-, Penta-, Hexa- und Octa-methylendiamin, besonders bevorzugt ist Hexamethylendiamin. Ein Beispiel für Omega-Aminocarbonsäuren ist 11-Aminoundecansäure, Beispiele für Lactame sind Epsilon-Caprolactam und Omega-Laurinlactam. Besonders bevorzugte aliphatische Polyamide sind Polycaprolactam (PA 6) und Polyhexamethylenadipinamid (PA 66) oder Mischungen aus diesen Polyamiden. Das aliphatische Copolyamid enthält verschiedene der genannten Einheiten. Ein bevorzugtes aliphatisches Copolyamid besteht aus Caprolactam-, Hexamethylendiamin- und Adipinsäureeinheiten (PA 6/66).

Die äußere Schicht der schlauchförmigen Verpackungshülle zeigt eine höhere Wasseraufnahmefähigkeit als die mittlere Schicht und in bevorzugter Ausführungsform auch als die innere Schicht, so daß sie sich als Wursthülle vor dem Füllvorgang gut wässern läßt und die erforderliche Geschmeidigkeit zeigt. Die mittlere Schicht mit der verringerten Wasseraufnahmefähigkeit verstärkt dagegen die Barriereeigenschaften der inneren Schicht. Besonders geeignet für die äußere Schicht sind deshalb PA 6 und PA 66, die auch in Mischung mit anderen wasseraufnahmefähigen Polymeren, auch mit Polyester, vorliegen. Durch den Zusatz von Polyester wird die biaxiale Streckung des Schlauches erleichtert, d.h. die erforderliche Reckkraft wird überraschenderweise herabgesetzt, und auch die Festigkeit der Hülle wird insgesamt erhöht.

Polyester sind bekanntlich Kondensationsprodukte von Diolen und aromatischen Dicarbonsäuren, insbesondere Terephthalsäure und gegebenenfalls zusätzlich Isophthalsäure. In geringem Umfang kann der Polyester mit aliphatischen Dicarbonsäuren, wie z.B. Adipinsäure, modifiziert sein. Die Diole sind insbesondere aliphatische Verbindungen der Formel HO-(CH₂)ₙ-OH (n=2-8), wie Äthylenglykol, 1,4-Butylenglykol, 1,3-Propylenglykol oder Hexamethylenglykol, und alicyclische Verbindungen wie 1,4-Cyclohexandimethanol. Ganz besonders bevorzugt wird Polybutylenterephthalat in der Polymermischung verwendet. Der Anteil des Polyesters beträgt gewöhnlich 5 bis 15 Gew.-% bezogen auf die Polymermischung der äußeren Schicht der Verpackungshülle.

Es ist im Einzelfall zweckmäßig, die äußere Polyamidschicht durch Zusatz auch von anderen, mit dem Polyamid bzw. mit dem Polyamidgemisch verträglichen Polymeren bis zu einem Anteil von 25 Gew.-% zu modifizieren. Geeignete zusätzliche Polymere sind beispielsweise auch Polyolefine, d.h. Homo- oder Mischpolymere von alpha-Olefinen mit 2 bis 8 C-Atomen, insbesondere Ethylen, Propylen und Butylen, vorzugsweise Polyethylen, insbesondere LDPE und LLDPE, sowie modifizierte Polyolefine mit funktionellen Gruppen, wie sie in der mittleren Schicht als geeignete haftungsvermittelnde Komponente eingesetzt werden, z.B. Polyolefine mit Carboxyl-Resten, also Gruppen, die aus Säuren, Estern, Anhydriden und Salzen von Carbonsäuren bestehen. Das Polyolefin und das modifizierte Polyolefin verbessern die Haftung der äußeren Schicht mit der mittleren Schicht und erhöhen die Geschmeidigkeit der Hülle. Sie sind allerdings im allgemeinen maximal nur mit 3 bis 10 Gew.-% in der äußeren Schicht vorhanden, um die Wasseraufnahmefähigkeit und die Festigkeit der äußeren Schicht nicht wesentlich zu beeinträchtigen. Gegebenenfalls enthält die äußere Schicht übliche Additive, z.B. Mattierungsmittel, um den Glanz herabzusetzen. Ferner zeigt die äußere Schicht gute Farbhaftung und läßt sich problemlos vollflächig bedrucken.

Die mittlere Schicht der Verpackungshülle zeigt praktisch keine Wasserdampfdurchlässigkeit und nimmt auch kein Wasser auf. Für diesen Zweck sollte die mittlere Schicht eine Mindestdicke von 2 um aufweisen. Im allgemeinen ist eine Dicke von 5 bis 25 µm ausreichend, um die bei Wursthüllen für Brüh- und Kochwurst geforderte Wasserdampfundurchlässigkeit zu erreichen.

Die mittlere Schicht besteht aus einem oder mehreren polyolefinischen Verbindungen und einem Mittel, welches die Haftung zwischen den beiden Polyamidschichten und der dazwischen liegenden Polyolefinschicht verbessert. Dieses Mittel ist entweder weitgehend homogen über dem gesamten Querschnitt der mittleren Schicht verteilt oder befindet sich zumindest in den Grenzflächen zu den benachbarten Polyamidschichten. Im ersten Fall ist die mittlere Schicht aus einer einzigen Schicht aufgebaut, im zweiten Fall besteht die mittlere Schicht vorzugsweise aus einem Polyolefinkern und jeweils einer Schicht aus Polyolefin/Haftvermittler oder nur Haftvermittler auf den beiden Oberflächen des Polyolefinkerns, so daß sich im ersten Fall eine insgesamt dreischichtige, im zweiten Fall eine insgesamt 5-schichtige Struktur der Hüllenwand ergibt. Im Hinblick auf die angestrebte geringe Gesamtdicke der Schlauchwand von kleiner als 60 um und dem geringen Schlauchkaliber wird zur Vermeidung von Schwierigkeiten bei der Konstruktion geeigneter Coextrusionsdüsen die dreischichtige Struktur bevorzugt. In der bevorzugten dreischichtigen Ausführungsform wird die haftungsvermittelnde Komponente nicht als eigene Schicht zwischen der mittleren und der äußeren bzw. zwischen der mittleren und der inneren Schicht vorgesehen, vielmehr wird diese Verbindung in die mittlere Schicht eingearbeitet. Dadurch wird die Bindekraft zwischen der mittleren Polyolefinschicht und den angrenzenden Polyamidschichten erhöht, so daß bei der Coextrusion der drei Schichten ein fester Verbund entsteht, der selbst unter Heißwassereinwirkung beim Brühen der Wurst keine Schichttrennung erfährt.

Der Anteil dieser haftungsvermittelnden Komponente beträgt im allgemeinen 5 bis 50, insbesondere 10 bis 35 Gew.-%, bezogen auf die in der mittleren Schicht vorliegende Polymermischung. Es ist allerdings zu beachten, daß sich die Wasserdampfdurchlässigkeit der mittleren Schicht durch die funktionellen Gruppen des Haftvermittlers im allgemeinen etwas vergrößert, weshalb dieser Zusatz möglichst gering sein sollte. Im allgemeinen sind deshalb 20 bis 25 Gew.-%, bezogen auf die Polymermischung der mittleren Schicht, ausreichend.

Das Polyolefin der mittleren Schicht ist gewöhnlich ein Homopolymeres von Ethylen oder Propylen oder ein Mischpolymeres von linearen Alpha-Olefinen mit 2 bis 8 C-Atomen oder eine Mischung aus diesen Polymeren. Geeignete Mischpolymere sind C₂/C₃- und C₃/C₄-Copolymere sowie C₂/C₃/C₄-Terpolymere, z.B. eine Mischung aus C₃/C₄-Copolymer und C₂/C₃/C₄-Terpolymer.

Die haftungsvermittelnde Komponente ist ein Mittel, wie es zur Herstellung von coextrudierten Verbunden aus polaren und unpolaren Kunststoffen wie Polyamid und Polyolefin bekannt ist. Es besteht gewöhnlich aus einem mit funktionellen Gruppen modifizierten Polyolefinharz, welches aus Ethylen- und/oder Propylen-Einheiten, gegebenenfalls auch noch weiteren linearen Alpha-Olefinen mit 3 bis 10 C-Atomen, aufgebaut ist. Die olefinische Kette gewährleistet die Verträglichkeit mit dem Polyolefin der mittleren Schicht und die Extrudierbarkeit der haftungsvermittelnden Komponente. Die funktionellen Gruppen sind insbesondere Einheiten von Vinylacetat, Vinylalkohol, ethylenisch ungesättigte Carbonsäuren wie Acrylsäure und Methacrylsäure sowie ihre Ester und Salze, insbesondere Na- und Zn-Salze, ferner auch ethylenisch ungesättigte Carbonsäure-Anhydridgruppen. Sie führen zu einer ausreichenden Benetzbarkeit der Polyamid- und der Polyolefinschmelze bei der Coextrusion, so daß ein festhaftender Verbund entsteht.

Geeignete Haftvermittler bestehen insbesondere aus Pfropfpolymeren, Copolymeren oder Terpolymeren mit Ethylen- oder Propylen-Einheiten mit wenigstens einem Comonomeren aus der Gruppe umfassend (Meth)acrylsäure, (Meth)acrylsäureester (Ester von n-Alkanolen mit 1 bis 6 C-Atomen, z. B. Butylacrylat), Vinylacetat und/oder Maleinsäureanhydrid. Der Anteil der Einheiten mit funktionellen Gruppen beträgt gewöhnlich 3 bis 12 Gew.-%, bezogen auf das Gewicht des haftvermittelnden Polymeren. Zu den modifizierten Polyolefinharzen gehört auch gummimodifiziertes Polyethylen.

Sofern die Hülle eingefärbt werden soll, ist es zweckmäßig, den Farbstoff oder die Farbpigmente in die Mittelschicht einzuarbeiten, so daß diese mit dem Füllgut nicht in direkten Kontakt treten. Diese Maßnahme hat den Vorteil, daß der Streckprozeß durch die nukleierende Wirkung von Farbpigmenten nicht gestört wird. Ferner hat sich gezeigt, daß sich Farbpigmente in der Mittelschicht besonders leicht und gleichmäßig dispergieren lassen.

Die innere Schicht besteht in einer Ausführungsform aus aliphatischem Polyamid, aliphatischem Copolyamid oder einer Polymermischung aus wenigstens einer dieser Verbindungen. Auch weitere Polymere, z.B. Polyolefine, Polyester oder lonomere können bis zu einem Anteil von 15 Gew.-% in der inneren Polyamidschicht vorhanden sein. Diese Schicht besteht somit aus einem Polymeren oder einer Polymermischung, wie sie oben bereits für die äußere Schicht beschrieben worden ist. Das aliphatische Polyamid der inneren Schicht zeigt allerdings vorzugsweise eine niedrigere Wasseraufnahmefähigkeit als das aliphatische Polyamid der äußeren Schicht. Für die Innenschicht werden deshalb zweckmäßigerweise aliphatische Polyamide mit relativ langen Methylenketten wie z. B. PA 11 oder PA 12 oder Copolyamide mit diesen Einheiten eingesetzt. Durch den Zusatz von lonomeren zu dem aliphatischen Polyamid läßt sich die Haftung der Innenschicht zur Wurstmasse verbessern. Die Schicht aus aliphatischem Polyamid bzw. Copolyamid verhindert den direkten Kontakt zwischen Polyolefin und Wurstmasse. Die Sauerstoffbarriereeigenschaft dieser inneren Schicht ist allerdings vergleichsweise gering. Wenn die Hülle eine verringerte Sauerstoffdurchlässigkeit aufweisen soll, besteht die innere Schicht aus einem teilaromatischen Polyamid und/oder teilaromatischem Copolyamid. Das teilaromatische Polyamid bzw. Copolyamid besteht aus aliphatischen und aromatischen Einheiten.

In einer ersten Ausführungsform des teilaromatischen Polyamids bilden die Diamineinheiten überwiegend oder ausschließlich die aromatischen Einheiten. Beispiele für diese Einheiten sind Xylylendiamin- und Phenylendiamin-Einheiten. Die Dicarbonsäure-Einheiten dieser Ausführungsform sind dagegen überwiegend oder ausschließlich aliphatisch und enthalten gewöhnlich 4 bis 10 C-Atome. Bevorzugte aliphatische Dicarbonsäure-Einheiten sind Sebazinsäure und Azelainsäure, insbesondere Adipinsäure.

In einer zweiten Ausführungsform des teilaromatischen Polyamids bilden die Diamineinheiten überwiegend oder ausschließlich die aliphatischen Einheiten, während die Dicarbonsäureeinheiten überwiegend oder vollständig aus Resten von aromatischen Dicarbonsäuren, insbesondere Isophthalsäure und Terephthalsäure bestehen. Die aliphatischen Diamineinheiten bestehen gewöhnlich aus 4 bis 8 C-Atomen, vorzugsweise aus Caprolactam- und/oder Hexamethylendiamin-Einheiten. Das bevorzugte teilaromatische Copolyamid der zweiten Ausführungsform besteht aus Caprolactam- und/oder Hexamethylendiamin-Einheiten sowie Terephthalsäure- und/oder Isophthalsäure-Einheiten, es ist insbesondere PA 6I/6T.

Die erste Ausführungsform des teilaromatischen Polyamids bzw. Copolyamids enthält gegebenenfalls bis zu 5 Mol-% aliphatische Diamin-Einheiten und bis zu 5 Mol-% aromatische Dicarbonsäure-Einheiten. Ebenso kann die zweite Ausführungsform des teilaromatischen Polyamids bzw. Copolyamids bis zu 5 Mol-% aromatische Diamin-Einheiten und bis zu 5 Mol-% aliphatische Dicarbonsäure-Einheiten enthalten.

Es hat sich allerdings gezeigt, daß Innenschichten aus reinem teilaromatischem Polyamid und/oder reinem teilaromatischem Copolyamid relativ steif und hart sind und dazu führen, daß die aufeinanderliegenden Innenseiten der flachgelegten Hülle zum gegenseitigen Verkleben neigen. Durch die Einwirkung von feuchtem Füllgut besteht zudem die Gefahr, daß dieses Material versprödet.

Es ist deshalb gerade bei Verwendung der Hülle als Wursthülle von Vorteil, wenn die innere Schicht noch zusätzlich aliphatische Polyamide und/oder aliphatische Copolyamide enthält. Insbesondere wenn das teilaromatische Polyamid bzw. Copolyamid aus der genannten zweiten Ausführungsform besteht, liegt das teilaromatische Polyamid in Mischung mit einem gesättigten linearen aliphatischen Polyamid und/oder einem gesättigten linearen aliphatischen Copolyamid vor. Eine Hülle mit einer inneren Schicht aus dieser Polyamidmischung ist außerdem besonders gut biaxial verstreckbar.

Dieses zusätzliche aliphatische Polyamid in der Polymermischung der inneren Schicht besteht aus dem Reaktionsprodukt einer aliphatischen Dicarbonsäure, vorzugsweise mit 4 bis 10 C-Atomen, mit aliphatischen primären Diaminen, vorzugsweise mit 4 bis 8 C-Atomen. Beispiele für geeignete Dicarbonsäuren sind Adipinsäure, Azelainsäure, Sebazinsäure und Dodecandicarbonsäure, geeignete Diamine sind Tetra-, Penta-, Hexa- und Octa-methylendiamin, besonders bevorzugt ist Hexamethylendiamin. Weiterhin kann das zusätzliche aliphatische Polyamid der Polyamidmischung auch aus Einheiten von Omega-Aminocarbonsäuren mit 6 bis 12 C-Atomen oder deren Lactamen aufgebaut sein, beispielsweise von 11-Aminoundecansäure, Epsilon-Caprolactam oder Omega-Laurinlactam. Die aliphatischen Copolyamide in der Mischung mit dem teilaromatischen Polyamid bzw. Copolyamid enthalten verschiedene der genannten Einheiten des aliphatischen Polyamids. Ein bevorzugtes aliphatisches Copolyamid besteht aus Caprolactam-, Hexamethylendiamin- und Adipinsäure-Einheiten. Besonders bevorzugt sind PA 6, PA 66, PA 6/66, PA 11 und PA 12 oder Mischungen dieser Polymeren als zusätzliche Komponente neben dem teilaromatischen Polyamid und/oder Copolyamid in der inneren Schicht.

Der Anteil des teilaromatischen Polyamids und/oder Copolyamids in der inneren Schicht beträgt vorzugsweise 5 bis 85, insbesondere 10 bis 40 Gew.-%, bezogen auf die Polymermischung aus teilaromatischen und aliphatischen Polyamiden und Copolyamiden. In diesem Bereich des Mischungsverhältnisses wird eine geschmeidige und dennoch sauerstoffundurchlässige Innenschicht erzielt. Mit zunehmendem Anteil des teilaromatischen Polyamids/Copolyamids erhöht sich andererseits die Haftung der Wurstmasse an der Hülleninnenwand, so daß durch die Erhöhung des Anteils des teilaromatischen Polyamids/Copolyamids auch in dieser Hinsicht die Hülleneigenschaften variiert werden können.

Die Herstellung der Schlauchhülle erfolgt vorzugsweise durch Coextrusion der die einzelnen Schichten bildenden Polymeren durch eine ringförmige Düse, z.B. mit einer Anlage wie sie in der EP-A-0 305 874 beschrieben ist. Durch die biaxiale Streckung wird die Hülle orientiert und zeigt infolgedessen ausgezeichnete Deformationsbeständigkeit und elastisches Rückdehnungsvermögen. Die Streckung erfolgt bei 70 bis 95 °C in einem Streckverhältnis von 2,4 bis 3,8, jeweils in Längs- und Querrichtung. Das Flächenstreckverhältnis beträgt 7 bis 12. Zur Verbesserung der Dimensionsstabilität wird nach dem Strecken gegebenenfalls eine teilweise oder vollständige Thermofixierung durchgeführt. Diese erfolgt gewöhnlich bei 120 bis 160 °C. Infolge Thermofixierung zeigt die Folie bei Wärmeeinwirkung bis etwa 90 °C nur einen relativ geringen Schrumpf von kleiner als 20, insbesondere kleiner als 15 % in Längs- und Querrichtung.

Die Verpackungshülle läßt sich problemlos zu Wursthüllen verarbeiten. Der Raffvorgang läßt sich überraschenderweise ohne Zusatz von Antiblockmitteln durchführen. Es ist ausreichend, wenn nur die üblichen Raffhilfsmittel wie Paraffinöl und Wasser verwendet werden. Die Raffalten werden nach dem Entraffen und Füllen der Hülle vollständig entfernt und sind an der fertiggestellten Wurst nicht mehr erkennbar.

Die Hülle läßt sich prall und faltenfrei mit Wurstmasse ausfüllen, ohne daß durch den Fülldruck unerwünschtes Ausbeulen der Hülle oder Delaminierung der Schichten erfolgt. Selbst bei schweren Würsten mit einem Kaliber von größer als 100 mm und einer Länge von größer als 60 cm ist beim anschließenden Garprozeß auf eine Kerntemperatur von 80 °C keine Bildung von langen Zipfeln, keine birnenförmigen Deformationen und keine "bag-in-bag"-Bildung zu beobachten. Die erhaltenen Würste sind zylinderförmig und zeigen einen gleichförmigen Querschnitt. Aufgrund der hohen Materialfestigkeit und des ausgezeichneten elastischen Rückstellvermögens entfällt ein kostenaufwendiges Abkühlen der Würste in kaltem Wasser. Es genügt ein kurzes, intervallmäßiges Kühlduschen mit nachfolgender Abkühlphase an der Luft.

Aufgrund der erhöhten Wasserdampfbarriere läßt sich eine Brühwurst mit der erfindungsgemäßen Hülle über einen Zeitraum von mindestens 8 Wochen ohne gravierenden Gewichtsverlust und ohne Faltenbildung lagern. Im Falle von Kalbsleberwurstfüllungen tritt im Vergleich zu streckorientierten PA 6-Hüllen (von gleicher Folienstärke) die Vergrauung des Wurstgutes wesentlich später ein, was auf eine verbesserte Sauerstoffbarriere zurückzuführen ist.

Würste mit der erfindungsgemäßen Hülle lassen sich glatt und ohne Einreißen anschneiden. Beim spiralförmigen Abschälen der Hülle tritt keine Schichttrennung ein.

Die Erfindung wird durch die nachfolgenden Beispiele näher erläutert. Prozentangaben sind in Gewichtsprozent.

### Beispiel 1

Mittels üblicher Coextrusionstechnik wird über 3 Einschneckenextruder und nachgeschalteter Coextrusions-Runddüse ein 3-schichtiges Rohr vom Aufbau:

| | | |
|---|---|---|
| Außenschicht | PA 6 (Grilon F 47) | |
| Mittelschicht | Dryblend aus | 80 % HDPE (Lupolen 2441 D) |
| | | 20 % Haftvermittler auf Basis von LLDPE/Methacrylsäure-Copolymer (Plexar OH 002) |
| Innenschicht | PA 6 (Grilon F 47) | |

mit einem Durchmesser von 23 mm und einer Gesamtwandstärke von 0,35 mm geformt. Die Einzelschichtdicken betragen dabei:

| | |
|---|---|
| Außenschicht: | 220 µm |
| Mittelschicht: | 90 µm |
| Innenschicht: | 40 µm. |

Dieses Rohr wird mittels IR-Strahlung innerhalb von 2 Sekunden auf Strecktemperatur (etwa 80 °C) gebracht.

Durch Aufbringen eines Drucks von etwa 1 bar ins Innere des erwärmten Rohres wird dieses biaxial um einen Flächenfaktor von 8,6 verstreckt und in einer zweiten Blase thermofixiert, flachgelegt und aufgewikkelt.

Die Dicke der resultierenden Folie beträgt 40 µm. Eine Bestimmung der Einzelschichtdicken gibt:
25 µm Außenschicht
10 µm Mittelschicht
5 µm Innenschicht.

### Beispiel 2

Ein 3-schichtiges Rohr wird analog dem Beispiel 1 mit einem Aufbau von:

| | | |
|---|---|---|
| Außenschicht | PA 6 (Grilon F 47) | |
| Mittelschicht | Dryblend | aus 80 % HDPE (Lupolen 2441 D) |
| | | und 20 % Haftvermittler auf Basis von LLDPE/Methacrylsäure-Copolymer (Plexar OH 002) |
| Innenschicht | Dryblend | aus 70 % PA 6 (Grilon F 47) |
| | | und 30 % PA 6I/6T (Grivory G 21) |

hergestellt und ebenso wie im Beispiel 1 zum Schlauch gestreckt und thermofixiert. Die Schichtdickenverteilung entspricht Beispiel 1.

Als Vergleichsbeispiele wurden
a) ein einlagiger Schlauch aus einem orientierten Polyamid/Polybutylenterephthalat-Blend (oPAxPBT-Blend) gemäß DE-A-34 36 682,
b) ein unorientierter einlagiger Blasschlauch aus Polyamid-12 (PA-12) und
c) eine Mehrschichthülle mit dem Aufbau Polyamid-Haftvermittler-Polyethylen (PA/HV/PE) gemäß DE-A-38 16942
hergestellt.

Tabelle 1 enthält mechanische Kenndaten und die Barriereeigenschaften dieser Hüllen. Tabelle 2 zeigt den anwendungstechnischen Vergleich anhand von Fleischwurst- bzw. Leberwurstfüllungen. Die vorteilhaften Eigenschaften der erfindungsgemäßen Hüllen zeigten sich insbesondere bei der anwendungstechnischen Beurteilung.

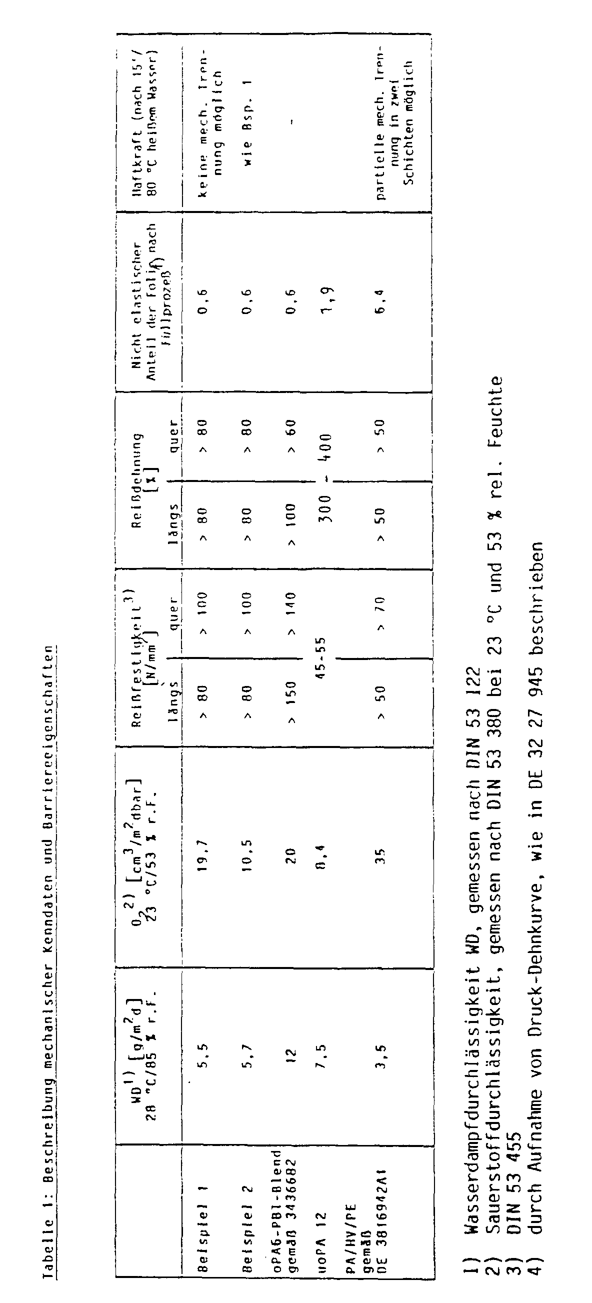

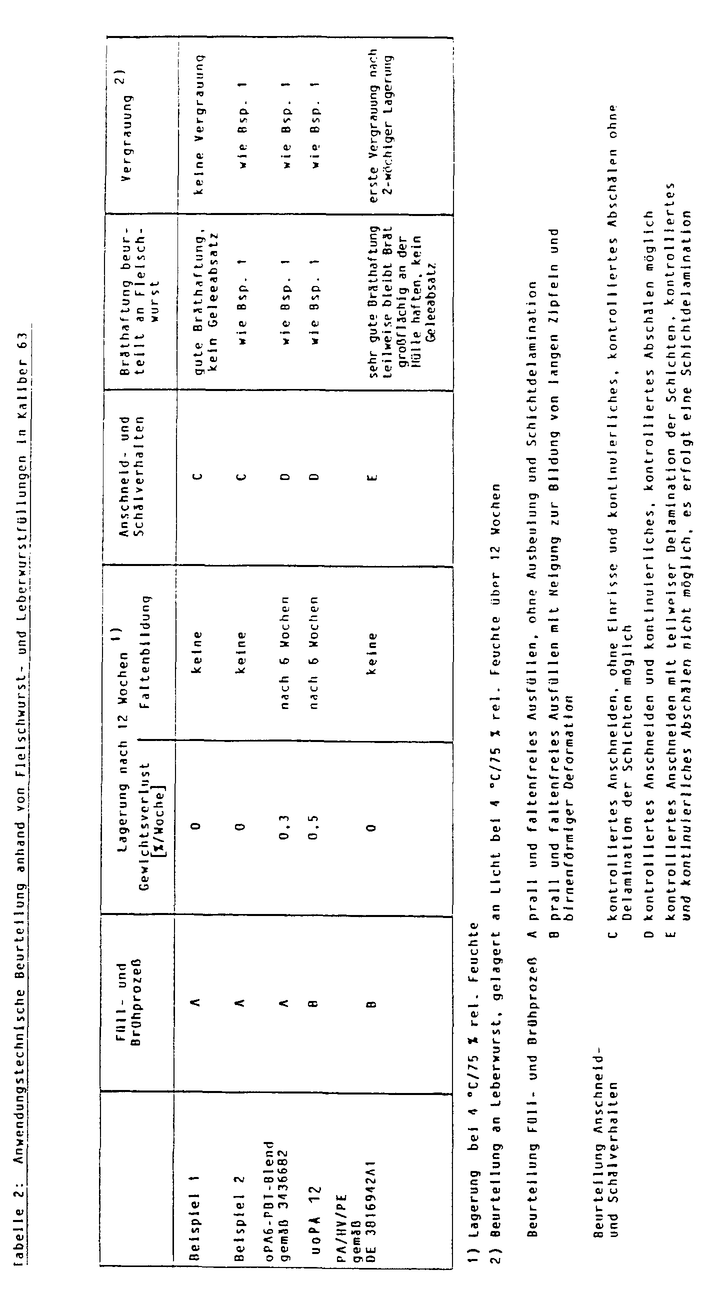

## Patentansprüche

1. Mehrschichtige, biaxial verstreckte, schlauchförmige Verpackungshülle für pastöses Füllgut auf Basis von Polyamid, **dadurch gekennzeichnet, daß** sie im wesentlichen aus
- einer äußeren Schicht, die aus aliphatischem Polyamid, aliphatischem Copolyamid oder einer Mischung dieser Polymere und bis zu 25 % weiteres Polymeres, bezogen auf die Polymermischung, besteht,
- einer mittleren Schicht, die aus Polyolefin, einem Haftvermittler und gegebenenfalls Farbstoff oder Farbpigmenten besteht, wobei der Haftvermittler ein mit funktionellen Gruppen modifiziertes Polyolefinharz ist, und
- einer inneren Schicht auf Basis von aliphatischen und/oder teilaromatischen Copolyamiden
besteht und bei Wärmeeinwirkung bis etwa 90 °C einen Schrumpf von kleiner als 20 % in Längs- und Querrichtung zeigt.

2. Hülle nach Anspruch 1, **dadurch gekennzeichnet, daß** das Polyamid oder Copolyamid der äußeren Schicht aus aliphatischen Dicarbonsäure-Einheiten, bevorzugt solchen mit 4 bis 10 C-Atomen, besonders bevorzugt Adipinsäure-Einheiten, und aliphatischen Diamin-Einheiten, bevorzugt solchen mit 4 bis 8 C-Atomen, besonders bevorzugt Hexamethylendiamin-Einheiten, und/oder aus Einheiten von Omega-Aminocarbonsäuren mit 6 bis 12 C-Atomen oder deren Lactamen, besonders bevorzugt 11-Aminoundecansäure, Omega-Laurinlactam und Caprolactam, besteht.

3. Hülle nach Anspruch 1 oder 2, **dadurch gekennzeichnet, daß** das weitere Polymere in der äußeren Schicht ein Polyolefin, bevorzugt Polyethylen, ein lonomer oder ein Polyester, besonders bevorzugt Polybutylenterephthalat, ist.

4. Hülle nach einem der Ansprüche 1 bis 3, **dadurch gekennzeichnet, daß** das Polyolefin der mittleren Schicht ein Homopolymer aus Ethylen oder Propylen, ein Mischpolymer aus linearen alpha-Olefinen mit 2 bis 8 C-Atomen oder eine Mischung dieser Polymere ist.

5. Hülle nach Anspruch 4, **dadurch gekennzeichnet, daß** das Polyolefin aus Mischpolymeren mit Einheiten von Ethylen/Propylen, Ethylen/Propylen/Butylen oder Propylen/Butylen oder aus Mischungen dieser Polymeren besteht.

6. Hülle nach einem der Ansprüche 1 bis 5, **dadurch gekennzeichnet, daß** die mittlere Schicht aus einer Mischung des Polyolefins und der haftungsvermittelnden Komponente besteht, wobei die haftungsvermittelnde Komponente einen Anteil von 5 bis 50, insbesondere 10 bis 35 Gew.-%, bezogen auf die Polymermischung, hat.

7. Hülle nach einem der Ansprüche 1 bis 6, **dadurch gekennzeichnet, daß** die innere Schicht aus einem oder mehreren teilaromatischen Polyamiden und/oder teilaromatischen Copolyamiden aus aliphatischen Diamineinheiten, bevorzugt mit 4 bis 8 C-Atomen, besonders bevorzugt Caprolactam- und/oder Hexamethylendiamin-Einheiten, und aromatischen Dicarbonsäureeinheiten, besonders bevorzugt Isophthalsäure- und/oder Terephthalsäureeinheiten, und/oder aus linearen aliphatischem Polyamid und/oder aliphatischem Copolyamid aufgebaut ist.

8. Hülle nach einem der Ansprüche 1 bis 6, **dadurch gekennzeichnet, daß** die innere Schicht aus einem oder mehreren teilaromatischen Polyamiden und/oder teilaromatischen Copolyamiden aus aromatischen Diamineinheiten, besonders bevorzugt Xylylendiamin- und/oder Phenylendiamin-Einheiten, und aliphatischen Dicarbonsäure-Einheiten, bevorzugt mit 4 bis 10 C-Atomen, besonders bevorzugt Adipinsäure-Einheiten, und/oder linearen aliphatischem Polyamid und/oder aliphatischem Copolyamid, aufgebaut ist.

9. Hülle nach einem der Ansprüche 1 bis 8, **dadurch gekennzeichnet, daß** der gesamte Anteil des teilaromatischen Polyamids und/oder Copolyamids 5 bis 85, insbesondere 10 bis 40 Gew.-%, bezogen auf die Mischung aus teilaromatischen und aliphatischen Polyamiden und Copolyamiden der inneren Schicht, beträgt.

10. Hülle nach einem der Ansprüche 1 bis 9, **dadurch gekennzeichnet, daß** die innere Schicht als lineares aliphatisches Polyamid oder Copolyamid eine der in Anspruch 2 genannten Polymeren enthält.

11. Hülle nach einem der Ansprüche 1 bis 10, **dadurch gekennzeichnet, daß** sie aus einer dreischichtigen coextrudierten und biaxial streckorientierten Schlauchfolie besteht, die gegebenenfalls thermofixiert ist.

12. Hülle nach einem der Ansprüche 1 bis 11, **dadurch gekennzeichnet, daß** ihre Wanddicke 30 bis 60, vorzugsweise 40 bis 50, Mikrometer beträgt, wobei der Anteil der äußeren Schicht 45 bis 80 %, der mittleren Schicht 5 bis 40 % und der inneren Schicht 2 bis 35 % beträgt.

13. Hülle nach einem der Ansprüche 1 bis 12, **dadurch gekennzeichnet, daß** das mit funktionellen Gruppen modifizierte Polyolefinharz ein Pfropfpolymer, Copolymer oder Terpolymer mit Ethylen- oder Propyleneinheiten sowie Einheiten aus (Meth)äcrylsäure, (Meth)acrylsäure-(C₁-C₆)alkylester, Vinylacetat und/oder Maleinsäureanhydrid oder ein gummimodifiziertes Polyethylen ist.

## Claims

1. Multilayered, biaxially oriented tubular casing for pasty matter, on a basis of polyamide, **characterized in that** it is essentially comprised of
- an outer layer consisting of aliphatic polyamide, aliphatic copolyamide or a blend thereof comprising up to 25 % by weight, relative to the polymer blend, of a further polymer,
- a central layer consisting of polyolefin, an adhesion promoter and optionally a dye or pigment, said adhesion promoter being a polyolefin resin modified with functional groups, and
- an inner layer based on aliphatic and/or aromatic copolyamides,
and shows a shrink of less than 20 % in the longitudinal and transverse directions under the action of heat at a temperature of up to about 90 °C.

2. Casing as claimed in claim 1, **characterized in that** the polyamide or copolyamide of the outer layer is comprised of aliphatic dicarboxylic acid units which preferably have 4 to 10 carbon atoms, particularly preferably units of adipic acid, and of aliphatic diamine units which preferably have 4 to 8 carbon atoms, particularly preferably hexamethylene diamine units, and/or of units of omega-aminocarboxylic acids having 6 to 12 carbon atoms or the lactams thereof, particularly preferably 11-amino-undecanoic acid, omega-lauric lactam and caprolactam.

3. Casing as claimed in claim 1 or 2, **characterized in that** the further polymer is a polyolefin, preferably polyethylene, a ionomer or a polyester, particularly preferably polybutylene terephthalate.

4. Casing as claimed in any of claims 1 to 3, **characterized in that** the polyolefin of the central layer is comprised of a homopolymer of ethylene or propylene, of a copolymer of linear alpha-olefins having 2 to 8 carbon atoms or of a blend of these polymers.

5. Casing as claimed in claim 4, **characterized in that** the polyolefin is comprised of copolymers comprising units of ethylene/propylene, ethylene/propylene/butylene or propylene/butylene, or of blends of these polymers.

6. Casing as claimed in any of claims 1 to 5, **characterized in that** the central layer is comprised of a blend of the polyolefin and the adhesion-promoting component, in which 5 to 50 % by weight, in particular 10 to 35 % by weight, relative to the polymer blend, of the adhesion-promoting component are contained.

7. Casing as claimed in any of claims 1 to 6, **characterized in that** the inner layer is comprised of one or several partially aromatic polyamides and/or partially aromatic copolyamides comprising aliphatic diamine units, which preferably have 4 to 8 carbon atoms, particularly preferably units of caprolactam and/or hexamethylene diamine, and aromatic dicarboxylic acid units, particularly preferably units of isophthalic and/or terephthalic acid, and/or of linear aliphatic polyamide and/or aliphatic copolyamide.

8. Casing as claimed in any of claims 1 to 6, **characterized in that** the inner layer is comprised of one or several partially aromatic polyamides and/or partially aromatic copolyamides comprising aromatic diamine units, particularly preferably xylylenediamine and/or phenylene diamine units, and of aliphatic dicarboxylic acid units which preferably have 4 to 10 carbon atoms, particularly preferably units of adipic acid, and/or of linear aliphatic polyamide and/or aliphatic copolyamide.

9. Casing as claimed in any of claims 1 to 8, **characterized in that** the total amount of the partially aromatic polyamide and/or copolyamide is 5 to 85 % by weight, in particular 10 to 40 % by weight, relative to the blend of partially aromatic and aliphatic polyamides and copolyamides contained in the inner layer.

10. Casing as claimed in any of claims 1 to 9, **characterized in that** the linear aliphatic polyamide or copolyamide contained in the inner layer is one of the polymers listed in claim 2.

11. Casing as claimed in any of claims 1 to 10, **characterized in that** it is comprised of a three-layered coextruded and biaxially stretch-oriented tubular film which optionally is heat-set.

12. Casing as claimed in any of claims 1 to 11, **characterized in that** its wall thickness is from 30 to 60 µm, preferably from 40 to 50 µm, the thickness of the outer layer amounting to 45 to 80 %, the thickness of the central layer amounting to 5 to 40 %, and the thickness of the inner layer amounting to 2 to 35 %, of the total thickness.

13. Casing as claimed in any of claims 1 to 12, **characterized in that** the polyolefin resin modified with functional groups is a graft polymer, a copolymer or a terpolymer comprising ethylene or propylene units and units of (meth)acrytic acid, (meth)acrylid acid-(C₁ to C₆)alkyl ester, vinyl acetate and/or maleic add anhydride or is a rubber-modified polyethylene.

## Revendications

1. Enveloppe multicouche, étirée biaxialement, de conditionnement en forme de boyau, pour contenu pâteux, à base de polyamide, **caractérisée en ce qu'**elle est essentiellement constituée
- d'une couche externe à base d'un polyamide aliphatique, d'un copolyamide aliphatique ou d'un mélange de ces polymères, ainsi que de jusqu'à 25% par rapport au mélange de polymères d'un autre polymère,
- d'une couche centrale qui est constituée d'une polyoléfine, d'un agent favorisant l'adhérence et éventuellement d'un colorant ou de pigments colorés, l'agent favorisant l'adhérence étant une résine polyoléfinique modifiée par des groupes fonctionnels, et
- d'une couche interne à base de copolyamides aliphatiques et/ou de copolyamides partiellement aromatiques,
et qu'elle présente sous l'effet de chaleur de jusqu'à 90°C environ un retrait inférieur à 20% en direction longitudinale et transversale.

2. Enveloppe selon la revendication 1, **caractérisée en ce que** le polyamide ou copolyamide de la couche externe est constitué de motifs acide dicarboxylique aliphatique, de préférence de ceux ayant de 4 à 10 atomes de carbone, de façon particulièrement préférée de motifs acide adipique, et de motifs diamine aliphatique, de préférence de ceux ayant de 4 à 8 atomes de carbone, en particulier de motifs hexaméthylènediamine, et/ou de motifs d'acides ω-amino-carboxyliques ayant de 6 à 12 atomes de carbone ou de leurs lactames, de préférence d'acide 11-amino-undécanoïque, d'ω-laurolactame et de caprolactame.

3. Enveloppe selon la revendication 1 ou 2, **caractérisée en ce que** l'autre polymère dans la couche externe est une polyoléfine, de façon particulièrement préférée du polyéthylène, un ionomère ou un polyester, de façon particulièrement préférée du poly(térephtalate de butylène).

4. Enveloppe selon l'une des revendications 1 à 3, **caractérisée en ce que** la polyoléfine de la couche centrale est constituée d'un homopolymère d'éthylène ou de propylène, d'un copolymère d'α-oléfines linéaires ayant de 2 à 8 atomes de carbone, ou d'un mélange de ces polymères.

5. Enveloppe selon la revendication 4, **caractérisée en ce que** la polyoléfine est constituée de copolymères à motifs éthylèna/propylène, éthylène/propylène/butylène ou propylène/butylène, ou de mélanges de ces polymères.

6. Enveloppe salon l'une des revendications 1 à 5, **caractérisée en ce que** la couche centrale consiste en un mélange de la polyoléfine et du composant favorisant l'adhérence, qui contient de 5 à 50, en particulier de 10 à 35 % en poids, par rapport au mélange de polymères, du composant favorisant l'adhérence.

7. Enveloppe selon l'une des revendications 1 à 6, **caractérisée en ce que** la couche interne est constituée d'un ou plusieurs polyamides partiellement aromatiques et/ou copolyamides partiellement aromatiques, à base de motifs diamine aliphatique, ayant de préférence de 4 à 8 atomes de carborte, de façon particulièrement préférée de motifs caprolactame et/ou hexaméthylènediamine, et de motifs acide dicarboxylique aromatique, de façon particulièrement préférée de motifs acide isophtalique et/ou acide téréphtalique, et/ou d'un polyamide aliphatique linéaire et/ou d'un copolyamide aliphatique linéaire.

8. Enveloppe selon l'une des revendications 1 à 6, **caractérisée en ce que** la couche interne est constituée d'un ou plusieurs polyamides partiellement aromatiques et/ou copolyamides partiellement aromatiques, à base de motifs diamine aromatique, de façon particulièrement préférée de motifs xylylènediamine et/ou phénylènediamine, et de motifs acide dicarboxylique aliphatique ayant de préférence de 4 à 10 atomes de carbone, de façon particulièrement préférée de motifs acide adipique, et/ou d'un polyamide aliphatique linéaire et/ou d'un copolyamide aliphatique linéaire.

9. Enveloppe selon l'une des revendications 1 à 8, **caractérisée en ce que** la proportion totale du polyamide et/ou copolyamide partiellement aromatique va de 5 à 85, en particulier de 10 à 40 % en poids, par rapport au mélange de polyamides et copolyamides aliphatiques et partiellement aromatiques de la couche interne.

10. Enveloppe selon l'une des revendications 1 à 9, **caractérisée en ce que** la couche interne contient, en tant que polyamide ou copolyamide aliphatique linéaire, l'un des polymères mentionnés dans la revendication 2.

11. Enveloppe selon l'une des revendications 1 à 10, **caractérisée en ce qu'**elle consiste en une pellicule tricouche en forme de boyau, coextrudée et orientée blaxialement par étirage, qui est éventuellement thermofixée.

12. Enveloppe selon l'une des revendications 1 à 11, **caractérisée en ce que** son épaisseur de paroi va de 30 à 60, de préférence de 40 à 50 µm, la proportion de la couche externe allant de 45 à 80 %, celle de la couche centrale allant de 5 à 40 %, et celle de la couche interne allant de 2 à 35 %.

13. Enveloppe salon l'une des revendications 1 à 12, **caractérisée en ce que** la résine polyoléfinique modifiée par des groupes fonctionnels est un polymère greffé, un copolymère ou un terpolymère à motifs éthylène ou propylène, ainsi qu'à motifs acide (méth)acrylique, ester alkylique en C₁-C₆ d'acide (méth)acrylique, acétate de vinyle et/ou anhydride maléique, ou un polyéthylène modifié par un caoutchouc.
